# EUROPEAN PATENT SPECIFICATION

(11) **EP 2 067 060 B1**
(45) Date of publication and mention of the grant of the patent: **07.07.2010**
(21) Application number: 07794368.6
(22) Date of filing: 26.04.2007
(51) Int. Cl.: G02B 1/00, C08G 18/38, G03C 1/73

(54) **AN ARTICLE HAVING PHOTOCHROMIC PROPERTIES AND PROCESS FOR ITS MANUFACTURE**
ARTIKEL MIT PHOTOCHROMEN EIGENSCHAFTEN UND HERSTELLUNGSVERFAHREN DAFÜR
ARTICLE PRÉSENTANT DES PROPRIÉTÉS PHOTOCRHOMIQUES ET PROCÉDÉ DE FABRICATION ASSOCIÉ

(30) Priority: 04.05.2006 US 417379
(43) Date of publication of application: 10.06.2009
(73) Proprietor: Bayer MaterialScience LLC, Pittsburgh, PA 15205-9741 (US)
(72) Inventor: ARCHEY, Rick, L., Pleasant Hills, PA 15236-4334 (US); PYLES, Robert, A., Bethel Park, PA 15102-2306 (US); SHAFFER, Myron, W., New Cumberland, WV 26047-9769 (US); VIDRA, Eric, J., Pittsburgh, PA 15205-2563 (US)
(74) Representative: Klimiuk, Meike
(86) International application number: PCT/US2007/010023
(87) International publication number: WO 2007/133406

(56) References cited:
- US-A1- 2004 160 569
- US-A1- 2005 125 916
- US-A1- 2007 256 255
- US-B2- 6 733 543

## Description

### Field of the Invention

The invention relates to a process for making an article of manufacture molded of polymeric material and possessing photochromic properties and to an article made by the process.

### Background of the Invention

Polyurethane compositions that contain photochromic compounds are known: JP 5-28753 disclosed a coating material with photochromic properties and U.S. Patent 6,187,444 disclosed an article comprising a substrate and a polyurethane coating on at least one surface of the substrate, the coating containing photo-chromic compound. The photochromic polyurethane coating is prepared from an organic polyol comprising sections of hard and soft segment-producing polyols; an isocyanate, photochromic compound(s) and optional catalyst. U.S. Patent 4,889,413 disclosed a process for producing polyurethane having photo-chromic properties. In a first step a photochromic compound is incorporated into a diisocyanate compound or a polyol or into a mixture which is then polymerized to form useful photochromic polyurethane. U.S. Patent 6,166,129 disclosed photochromic polyurethane prepared of an isocyanate-reactive mixture that contained polyols, low molecular weight diols or triols, an aliphatic polyisocyanate and a photochromic compound. U.S. Patent 6,068,797 disclosed a method of preparing a shaped article having a photochromic coating and a curable photochromic powder coating composition. The method includes applying curable powder coating composition to the interior of a mold, the powder coating compositions including a photochromic material. Following the application, the coating is cured and a polymerizable organic casting composition is then charged into the mold and polymerized. A shaped article coated by a photochromic coating is thus produced.

A method of tinting a sheet of transparent polyurethane comprising a coloring operation followed by a fixation operation is disclosed in U.S. Patent 4,454,170. The coloring operation is carried out through immersion of the polyurethane in a bath maintained under continuous agitation and formed of a dispersion of one or several colorants in an aqueous solution containing a surfactant or wetting agent. The fixation operation is carried out through rinsing in a boiling aqueous solution of sodium alkyl sulfonate. U.S. Patent 6,749,646 disclosed a process for tinting of articles molded from a polymeric resin. Preferably, the article is molded from polycarbonate and the process entails immersing the molded article in a dye bath that contains water, dye, a carrier and an optional surfactant. U.S. Patent 6,733,543 disclosed dyeing a molded article by immersing at least a portion thereof in a dyeing bath, retaining the portion in the bath for a period of time sufficient to allow an amount of dye to diffuse into the article, and removing the article from the bath. The molded article comprises a polymeric resin such as (co)polyester, (co)polycarbonates, acrylonitrile-butadiene-styrene, polyamide, polyurethane, polyalkyl(meth)acrylate, allyldiglycol carbonate and styrene copolymers. The dyeing bath contains in addition to dye, water, a plasticizing agent and a leveling agent. GDR Patent No. 116 520 disclosed a method of preparing photochromic polymer systems which include photochromic ortho-nitrobenzyl compounds added to reaction systems which lead to polyurethanes. EP146,136 disclosed an optical element with a photochromic coating, such as a polyurethane lacquer in which are incorporated one or more phototropic substances. JP3-269507 disclosed a coating material contains block polyisocyanate, polyol and photochromic material that is applied on a lens and is cured by heating in order to form a primer layer. A hard coat layer consisting of silicone is provided on the polyurethane primer layer.

### Summary of the Invention

A process for making an article molded of polymeric material, the article featuring photochromic properties is disclosed. To at least a portion of the surface of an article, molded of a composition that contains at least one transparent thermoplastic polymer or a transparent thermosetting composition there is applied a curable weatherable polyurethane coating. At least a portion of the coating is after curing brought into contact with a material system that contains (i) water, (ii)at least one carrier represented by formula **I,** 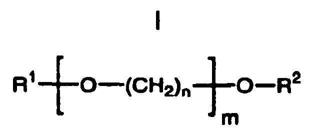 wherein R¹ is a radical selected from the group consisting of linear or branched C₁-C₁₈ alkyl, benzyl, benzoyl and phenyl, R² is R¹ or H; n is 2, 3 or 4, and m is 1 to 35; (iii)a photochromic compound and (iv) a diol under conditions calculated to bring about diffusion of said compound into the cured coating.

### Detailed Description of the Invention

In the practice of the inventive process an article formed of a transparent polymeric material is obtained. The term "formed" as used herein refers to any of the conventional processes for molding or shaping a polymeric material -thermoplastic or thermosetting to obtain a useful article. These include compression molding, casting, injection molding, rotational molding, extrusion, and blow molding.

The preferred embodiment entails making the article of a thermo-plastic molding composition by injection molding, extrusion or thermoforming. The transparency of the material be it thermo-plastic or thermosetting as determined by ASTM D 1003 should be at least 10% , preferably at least 20%, preferably not less than 25% preferably at least 50% and most preferably not less than 95% in all cases provided that the transparency and photochromic property (photochromicity) of the inventive article produced therefrom is not impaired.

Examples of suitable polymeric organic materials to be used in the practice of the invention include polycarbonate resin, such as the carbonate-linked resin derived from bisphenol A and phosgene, which is sold by Bayer MaterialScience LLC under the trademark Makrolon ; polyester; poly(methyl methacrylate) ; polymerizates of a polyol(allyl carbonate) monomer, especially diethylene glycol bis(allyl carbonate), which monomer is sold under the trademark CR-39, and polymerizates of copolymers of a polyol (allyl carbonate) with other copolymerizable monomeric materials, such as copolymers with vinyl acetate, copolymers with a polyurethane having terminal diacrylate functionality, and copolymers with aliphatic urethanes, the terminal portion of which contain allyl or acryl functional groups; poly(vinyl acetate), polyvinylbutyral, polyurethane, polymers of members of the group consisting of diethylene glycol dimethacrylate monomers, diisopropenyl benzene monomers, and ethoxylated trimethylol propane triacrylate monomers; cellulose acetate, cellulose propionate, cellulose butyrate, cellulose acetate butyrate, polystyrene and copolymers of styrene with methyl methacrylate, vinyl acetate and acrylonitrile, polyarylates, polysulfones, polysiloxanes and silicones, styrene-acrylonitrile (SAN) and polyamides and copolymers and blends thereof.

The suitable polymeric material may include any of the additives that are known in the art for their function such as mold release agents, flame retardant agents, pigments UV-stabilizers, hydrolytic stabilizers and thermal stabilizers, in all cases provided that the transparency if the inventive article molded therefrom is not impaired.

In a subsequent step of the process, at least part of the surface of the formed article is coated with a weatherable polyurethane coating. The preparation of such polyurethane coatings is described in Ullmann's Encyclopedia of Industrial Chemistry, Fifth Edition, 1992, Vol. A21, pages 665 to 716. The polyurethane coating is prepared from a polyisocyanate component and an isocyanate-reactive component the relative amounts of which are selected to provide equivalent ratios of isocyanate groups to isocyanate-reactive groups of about 0.8 to 3, preferably about 0.9 to 1.5. In a preferred embodiment, only one isocyanate-reactive component is used in the preparation of the coating. To accelerate its hardening the coating compositions may contain known polyurethane catalysts. The coating compositions may also contain functional additives such as wetting agents, flow-control agents, leveling agents, skin inhibitors, anti-foaming agents, fillers (such as silica, aluminum silicate and high boiling waxes, in all cases provided that the transparency of the inventive article produced therefrom is not impaired, substances for controlling the viscosity, pigments, dyes, UV absorbers and thermal, light and oxidative stabilizers plasticizers, initiators, free radical scavengers and adhesion promoting agents.

The coating compositions may be applied to the surface of the inventive article in the form of a solution or from the melt by conventional methods such as painting, rolling, pouring, spraying, dipping or flow coating.

Isocyanates suitable for the preparation of polyisocyanates include aliphatic, aromatic, cycloaliphatic and heterocyclic isocyanates, and mixtures thereof and include "modified", "unmodified" and mixtures of the "modified" and "unmodified" isocyanate compounds having "free", "blocked" or partially blocked isocyanate groups. The term "modified" in this context means that the isocyanate is changed in a known manner to introduce biuret, urea, carbodiimide, urethane or isocyanurate groups. In some cases, the "modified" isocyanate is obtained by cycloaddition processes to yield dimers and trimers of the isocyanate, i.e., polyisocyanates. Other methods for modifying isocyanates are described in Ullmann's Encyclopedia of Industrial Chemistry, Fifth Edition, 1989, Vol. A14, pages 611 to 625, and in U.S. Patent 4,442,145. In general trimers and isocyanurates would be considered the same chemical species.

The preferred isocyanate is selected from the group of isocyanate-containing compounds consisting of aliphatic isocyanates, cycloaliphatic isocyanates, blocked aliphatic isocyanates, blocked cycloaliphatic isocyanates and mixtures thereof. More preferably, the isocyanate component is selected from the group consisting of blocked aliphatic isocyanates, blocked cycloaliphatic isocyanates and mixtures thereof. Most preferably, the isocyanate component is a blocked aliphatic isocyanate that includes the isocyanurate group, for instance a blocked isocyanate component comprising blocked isocyanurates of isophorone diisocyanate.

Suitable isocyanates include modified or unmodified members having free, blocked or partially blocked isocyanate-containing components of the group consisting of: toluene-2,4-diisocyanate; toluene-2,6-diisocyanate; diphenyl methane-4,4'-diisocyanate; diphenyl methane-2,4'-diisocyanate; para-phenylene diisocyanate; biphenyl diisocyanate; 3,3'-dimethyl-4,4'-diphenylene diisocyanate; tetramethylene-1,4-diisocyanate; hexamethylene-1,6-diisocyanate; 2,2,4-trimethyl hexane-1,6-diisocyanate; lysine methyl ester diisocyanate; bis (isocyanato ethyl)fumarate; isophorone diisocyanate; ethylene diisocyanate; dodecane-1,12-diisocyanate; cyctobutane-1,3-diisocyanate; cyclohexane-1,3-diisocyanate; cyclohexane-1,4-diisocyanate; methyl cyclohexyl diisocyanate; hexahydrotoluene-2,4-diisocyanate; hexahydrotoluene-2,6-diisocyanate; hexahydrophenylene-1,3-diisocyanate; hexahydrophenylene-1,4-diisocyanate; perhydrodiphenylmethane-2,4'-diisocyanate; perhydrodiphenylmethane-4,4,-diisocyanate and mixtures thereof. Preferably, the isocyanate is selected from the group consisting of hexamethylene-1,6-diisocyanate; isophorone diisocyanate; dodecane-1,12-diisocyanate; and cyclohexane-1.3-diisocyanate and mixtures thereof; and more preferably, hexamethylene-1,6-diisocyanate, isophorone diisocyanate, and mixtures thereof.

Suitable polyisocyanates include those having aliphatically and/or cycloaliphatically bound isocyanate groups such as 1,6-hexamethylene diisocyanate, 2,2,4- and/or 2,4,4-trimethyl-1,6-hexamethylene diisocyanate, dodecamethylene diisocyanate, cyclohexane-1, 3- and -1,4-diisocyanate, 1-isocyanato-2-isocyanatomethyl cyclopentane, 1-isocyanato-3-isocyanato-methyl-3,5,5-trimethylcyclohexane (isophorone diisocyanate or IPDI), bis-(4-isocyanatocyclohexyl)-methane (HMDI), 1,3- and 1,4-bis-(isocyanatomethyl)-cyclohexane, bis-(4-isocyanato-3- methylcyclohexyl)-methane, xylylene diisocyanate, .α,α,α', α'-tetramethyl-1,3- and/or -1,4-xylylene diisocyanate, 1- isocyanato-1-methyl-4(3)-isocyanatomethyl cyclohexane, and 2,4- and/or 2, 6-hexahydrotoluylene diisocyanate. Also suitable though less preferred are aromatic polyisocyanates such as 2,4'- and/or 4,4'-diisocyanatodiphenyl methane and mixtures of these isomers with their higher homologs which are obtained in known manner by the phosgenation of aniline/formaldehyde condensates, 2,4- and/or 2,6-diisocyanatotoluene and mixtures of these compounds. If used, the aromatic polyisocyanates are preferably used in an amount of up to 40 weight percent, more preferably up to 20 weight percent, based on the weight of the polyisocyanates. Most preferably, the aromatic polyisocyanates are not used.

Relevant disclosures respecting polyisocyanates are included in U.S. Patents 3, 124,605; 3,201,372; 3,394,164; 3,644,457; 3,152,162; 5,914,383; 6,107,484; 6,090,939; 4,324,879 and 5,576,412.

Examples of suitable co-reactants are polyester polyols, polyether polyols, polyhydroxy polycarbonates, polyhydroxy polyacetals, polyhydroxy polyacrylates, polyhydroxy polyester amides and polyhydroxy polythioethers. Other suitable co reactants include aldimine oligomers which are the reaction products of alkyl aldehydes, such as, isobutyraldehyde with diamines, such as isophorone diamine. Ketimine oligomers which are the reaction product of alkyl ketones, such as, methyl isobutyl ketone with diamines, such as, 2-methyl pentamethylene diamine. Polyaspartic esters, which are the reaction product of diamines, such as, isophorone diamine with dialkyl maleates, such as, diethyl maleate. The polyester polyols, polyether polyols and polyhydroxy polycarbonates are preferred. In a preferred embodiment, a single co-reactant is used.

Known catalysts are used to accelerate hardening of the coating these include Lewis bases, Lewis acids and insertion catalysts such as are described in Ullmann's Encyclopedia of Industrial Chemistry, 5th Edition, 1992, Volume A21, pp. 673 to 674. These include the known polyurethane catalysts, e.g., tertiary amines such as triethylamine, pyridine, methyl pyridine, benzyl dimethylamine, N,N-dimethylamino cyclohexane, N-methylpiperidine, pentamethyl diethylene triamine, 1,4-diazabicyclo-2,2,2-octane and N,N'-dimethyl piperazine; or metal salts such as iron(III)-chloride, zinc chloride, zinc-2-ethyl caproate, tin(II)-ethyl caproate, dibutyltin(IV)-dilaurate and molybdenum glycolate.

A sufficient amount of catalyst or catalyst blend effective to cure the composition at ambient temperatures is used. Generally the catalyst is used in an amount of about 0.01-2% by weight, based on the weight of the binder. Among the useful catalyst special mention may be made of tertiary amines such as triethylene diamine and alkyl tin esters such as dibutyl tin dilaurate, dibutyl tin diacetate, and the like.

Generally, flow control agents e.g. such as polyacrylic acid, polyalkylacrylates, polyether modified dimethyl polysiloxane copolymer and polyester modified polydimethyl siloxane in amounts of about 0.1-5% by weight, based on the weight of the binder, may be used in the preparation of the coating.

Conventional organic solvents and diluents may be used in the context of preparing the polyurethane coating of the invention. Nonlimiting examples of organic solvents are aliphatic, aromatic and/or cycloaliphatic hydrocarbons, alkyl esters of acetic acid or propionic acid, alkanols, ketones, glycol ethers and/or glycol ether esters and the like in all cases provided that the transparency of the inventive article produced therefrom is not impaired.

The coating may be applied to the surface of the article by conventional techniques such as spraying, electrostatic spraying, dipping, brushing, flow coating and the like. The preferred technique of application is spraying. After its application to at least part of the surface of the article the coating may be dried and cured at room temperature up to 100°C for about 5-30 minutes.

The amount of the coating composition applied to the substrate is the amount necessary to incorporate a sufficient quantity of the photochromic compound to produce a coating that exhibits the required photochromic effect upon exposure to UV radiation.

The surface of the substrate to be coated prior to applying the polyurethane coating composition may be cleaned to enhance the adhesion of the coating. Cleaning methods are conventional and known and include ultrasonic cleaning; washing with an aqueous mixture of organic solvent, UV treatment, activated gas treatment, and chemical treatment such as hydroxylation in all cases provided that the transparency of the inventive article produced therefrom is not impaired. U.S. Patents 3,971,872; 4,904,525, and 5,104,692 discloses suitable surface treatments.

In a subsequent step of the inventive process, after curing its polyurethane coating the thus coated article is brought into contact with an aqueous material system that contains a photochromic compound, under condition calculated to bring about diffusion of the compound into the coating.

Accordingly the molded article carrying the cured polyurethane coating may be immersed in a bath containing a material system that contain water, photochromic compound, a carrier and a diol for a time and at temperature sufficient to facilitate at least some diffusion of the compound into the cured coating thus imparting to it photochromic properties. The immersion may be in a bath maintained at a temperature calculated to bring about diffusion at a commercially practical rate, preferably 30 and up to 99°C. more preferably 60 to 90°C for a time that is typically less than 1 hour, most preferably in the range of 1 to 15 minutes. The thus treated coated article is then withdrawn from the bath at any desired rate, including a rate calculated to bring about a gradient of photochromic effect.

The material system contains
(a) water in an amount of 65-75% pbw (percent by weight relative to the weight of the material system)
(b) an amount of photochromic compound sufficient to impart photochromic effect, generally 0.001 to 15 pbw, preferably 0.01 to 0.5 pbw
(c) a carrier conforming to formula I in an amount of 15-30 pbw 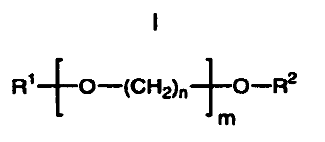 wherein R¹ is a radical selected from the group consisting of linear or branched C₁-C₁₈ alkyl, benzyl, benzoyl and phenyl which may be substituted in the aromatic ring by alkyl and or halogen" R² is R¹ or H; n is 2, 3 or 4, preferably 2 and m is 1 to 35 preferably 1 to 12, most preferably 1;
   In a preferred embodiment R¹ denotes butyl and R² denotes H, and
(d) a diol in an amount of 5-15 pbw.

The amount of photochromic compound used in the material system may vary and generally only small amounts are typically needed to impart desirable photochromic property to the article. Typically, the concentration of the compound in the system is 0.15 pbw, preferably-0.001 to 15 pbw more preferably 0.1 to 0.2 pbw.

The carrier is typically present in the material system in a positive amount up to and including 30 percent by weight, preferably less than or equal to 25 percent by weight, and more preferably less than or equal to 20 percent by weight, relative to the weight of the material system. Typically the carrier is present in the system in an amount of at least 1 percent by weight, preferably at least 5 percent by weight, and more preferably at least 15 percent by weight relative to the weight of the aqueous material system. The carrier may be present in the aqueous material system in an amount ranging between any combination of these upper and lower values, inclusive of the values thereof.

The suitable diol is preferably a member selected from the group consisting of linear or branched C₂-C₂₀ aliphatic diols, poly(C₂-C₄ alkylene glycol), cycloaliphatic diols having from 5 to 8 carbon atoms in the cyclic ring, monocyclic aromatic diols, bisphenols and hydrogenated bisphenols. Examples include ethylene glycol, propylene glycol, 1,3-propane diol, 1,2-and 2,3-butane diol, pentane diols, hexane diols, heptane diols, octane diols, nonane diols, decane diols, undecane diols, dodecane diols, tridecane diols, tetradecane diols, pentadecane diols, hexadecane diols, heptadecane diols, octadecane diols, nonadecane diols and icosane diols. Further examples include di-, tri-, tetra-, penta- and higher ethylene glycols, di-, tri-, tetra-, penta- and higher propylene glycols, and di-, tri-, tetra-, penta- and higher butylene glycols. Among the suitable cycloaliphatic diols mention may be made of cyclopentane diol, cyclohexane diol, cyclohexane dimethanol, cycloheptane diol and cyclooctane diol. Among the monocyclic aromatic diols that may be used mention may be made of benzene diol, e.g., 1,2-dihydroxy benzene and 1,3-dihydroxy benzene; C₁ -C₄ alkyl substituted benzene diol, e.g., 4-tert-butyl-benzene-1,2-dioi, 4-methyl-benzene-1,2-diol, 3-tert-butyl-5-methylbenzene-1,2-diol and 3,4,5,6-tetramethyl-benzene-1,2-diol; halo substituted benzene diol, e.g., 3,5-dichlorobenzene-1,2-diol, 3,4,5,6-tetrabromo-benzene-1,2-diol and 3,4,5-trichloro-benzene-1,2-diol; and C₁-C₄ alkyl and halo substituted benzene diol, e.g., 3-bromo-5-tert-butylbenzene-1,2-diol, 3,6-dichloro-4-methyl-benzene-1,2-diol, 3,-bromo-4,5-dimethyl-benzene-1,2-diol and 3-chloro-4,6-di-tert-butyl-benzene-1,2-diol. Suitable bisphenols and hydrogenated bisphenols are represented by formula **II,**

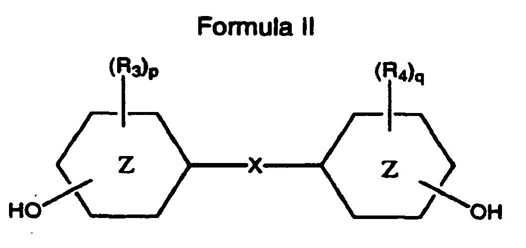

In formula II: R₃ and R₄ independently of one another and independently for each p and q denote C₁ -C₄ alkyl (e.g., methyl, ethyl, n-propyl, isopropyl, n-butyl, sec-butyl and tert-butyl), chlorine and bromine; p and q each independently denote an integer of 0 to 4; and -X- is a divalent linking group selected from -O-, -S-, -S(O₂)-, -C(O)-, -CH₂-, -CH=CH-, -C(CH₃)₂-, and
-C(CH₃)(C₆H₅)-; and 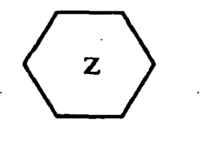 represents a benzene ring or a cyclohexane ring. An example of a bisphenol that may be used as diol is 4,4'-isopropylidenebisphenol (i.e., bisphenol A). An example of a hydrogenated bisphenol is 4,4'-isopropylidenebiscyclohexanol.

In a preferred embodiment the diol is a poly(C₂-C₄ alkylene glycol) selected from among diethylene glycol, triethylene glycol, tetraethylene glycol, pentaethylene glycol and mixtures thereof. Particularly preferred diols are diethylene glycol and propylene glycol.

The diol is typically present in the material system in an amount of less than or equal to 20 percent by weight, preferably less than or equal to 15 percent by weight, and more preferably less than or equal to 12 percent by weight. The diol is also typically present in the material system in an amount of at least 5 percent by weight, preferably at least 7 percent by weight, and more preferably at least 10 percent by weight. The diol may be present in the material system in an amount ranging between any combination of these upper and lower values, inclusive of the values thereof. For example, the diol may be present in the material system in an amount typically from 5 to 20 percent by weight, more typically from 7 to 15 percent by weight, and further typically in an amount of from 10 to 12 percent by weight. The percent weights being based on the total weight of the material system, in each case.

Photochromic compounds and their use in applications requiring reversible color change or darkening are known. Photochromic compounds are characterized in that they reversibly change their color upon exposure to UV light radiation. Included among photochromic compounds are oxazines, pyrans and fulgides. The reversible color change and its mechanism have been described in the literature. For an explanation as to the mechanisms operating in such compounds see "Chromogenic Materials (Photochromic)", Kirk-Othmer Encyclopedia of Chemical Technology, Fourth Edition, 1993, pp. 321-332, and "New Aspects of Photochromism in Bulk polymers", Photographic Science and Engineering, 1979, pp. 183-190.

The photochromic compounds that may be utilized with the polyurethane coating compositions of the present invention preferably have at least one activated absorption maxima within the range of between about 400 and 700 nanometers. These are known in the art and have been disclosed in U.S. Patents 4,818,096; 5,274,132; 5,429,774; 3,361,706 and 4,931,220. They may be used individually or may be used in combination with photochromic compounds that complement their activated color.

Examples of suitable photochromic compounds include benzopyrans, naphthopyrans, e.g., naphtho[1,2-b]pyrans and naphtho[2,1-b]pyrans, phenanthropyrans, indenonaphthopyrans, spiro(indoline)benzoxazines and naphthoxazines, spiro(indoline)pyridobenzoxazines, spiro(benzindoline)pyridobenzoxazines and spiro(benzindoline)naphthoxazines. Also suitable are photochromic organo-metal dithizonates, fulgides and fulgimides.

Water, preferably deionized and/or distilled water, is present in the material system in an amount of less than 85 percent by weight and more preferably less than or equal to 75 percent by weight. Typically water is present in the material system in an amount of at least 50 percent by weight, preferably at least 60 percent by weight, and more preferably at least 65 percent by weight, the percents being relative to the total weight of the aqueous material system.

The material system may optionally further contain up to 15 , preferably 7 to 12, most preferably 10-12 parts by weight (pbw) an emulsifier. The emulsifier is a substance that holds two or more immiscible liquids or solids in suspension (e.g., water and the dye). Suitable emulsifiers include ionic and non-ionic emulsifiers. Typical ionic emulsifiers are anionic, including amine salts or alkali salts of carboxylic, sulfamic or phosphoric acids, for example sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2-ethanediyl),alpha.-sulfo-omega-hydroxy ether with phenol 1-(methylphenyl)ethyl derivative ammonium salts; or amphoteric, that is, compounds bearing both anionic and cationic groups, for example lauryl sulfobetaine; dihydroxy ethylalkyl betaine; amido betaine based on coconut acids; disodium N-lauryl amino propionate; or the sodium salts of dicarboxylic acid coconut derivatives. Typical non-ionic emulsifiers include ethoxylated or propoxylated alkyl or aryl phenolic compounds such as octylphenoxypolyethyleneoxyethanol or poly(oxy-1,2-ethanediyl),alpha-phenyl-omega-hydroxy, styrenated. The preferred emulsifier is a mixture of C₁₄-C₁₈ and C₁₆-C₁₈ ethoxylated unsaturated fatty acids and poly(oxy-1,2-ethanediyl), alpha-sulfo-omega-hydroxy ether with phenol 1-(methylphenyl) ethyl derivative ammonium salts and poly(oxy-1,2-ethanediyl),alpha-phenyl-omega-hydroxy, styrenated.

Bringing the coated article into contact with the aqueous material system may be by dipping, that is immersing it in a bath containing the material system, by spraying the material system onto the coated article or by subjecting the coated article to flow coating. Bringing the coated article into contact with the aqueous material system is carried out under conditions calculated to bring about a degree of diffusion of penetration of the photochromic compound into the cured coating of the coated article. Adjusting of the temperature of the aqueous material system and/or that of the coated article, the time of contact and the orientation of the article in relation to the material system are included among the considered conditions and are determined by the skilled artisan in accordance with, among others, the geometry of the article and the desired degree of photochromic effect.

Applying material system to the surface of the coated article by "flow coating" refers to causing the material system to flow over a designated surface of the article, the flowing due primarily to gravity, to form a thin, at least temporary layer of liquid. The spraying of the material system entails to the use of force, additional to gravity in propelling the material system onto the surface of the coated article. "Flow coating" may be applied such as by pouring. The means for pouring a solution onto the surface of an article are known and require no elaboration. The art-skilled would adjust the rate of application and the position and/or orientation of the surface of the article so as to form thereon the, at least temporary, layer of the material system.

The molded article may be any of a variety of useful items; in a preferred embodiment, the article is dome shaped that finds applicability as an enclosure for a security camera, automotive and building glazing and photochromic lenses for sun wear.

Upon removal from contact with the aqueous material system, the inventive article is typically rinsed with deionized water or optionally deionized water, carrier and diol solution followed by deionized water to remove excess system therefrom.

The present invention is more particularly described in the following examples, which are intended to be illustrative only, since numerous modifications and variations therein will be apparent to those skilled in the art. Unless otherwise specified, all parts and percentages are by weight.

### EXAMPLES

Photochromic articles within the scope of the invention were prepared and evaluated.

Test specimens were molded of polycarbonate (Makrolon 3100 natural, a product of Bayer MaterlalScience, a homopolycarbonate of bisphenol A having MFR of 6 g/10 min. determined in accordance with ASTM D1238)

Specimens measuring 0.25 by 5 by 7.6 cm. were molded conventionally by injection molding.

A weatherable polyurethane coating in accordance with the invention was prepared and applied to each of the specimens. The coating was prepared by thoroughly mixing Components I and II:
Component I contained
   (a) 282.39 parts by weight (pbw) of a polyester polyol prepared from 34.6 parts 1,6-hexane diol, 9.8 parts trimethylol propane, 30.43 parts isophthalic acid, 5.4 parts phthalic acid anhydride and 10.7 parts adipic acid , and having an OH equivalent weight of 400, an OH content of 4.25% and a functionality of about 3.1, and
   (b) 385.26 pbw of a solvent mixture (6.78 pbw xylene, and 126.16 pbw of each of methylisobutyl ketone, n-butyl acetate and methyl n-amyl ketone) and
   (c) 1.69 pbw of a catalyst.
   Component I additionally contained a flow aid and light stabilizers believed to have no criticality in the context of the invention.
Component II contained 113.03 pbw of an isocyanurate group-containing polyisocyanate prepared from 1,6-hexamethylene diisocyanate and having an isocyanate content of 21.6%, a content of monomeric diisocyanate of <0.3% and a viscosity at 25°C of 3000 mPa.s.

Components I and II were mixed under agitation and stored in a sealed container.

The mixture was then applied to the test specimens by spraying and cured at room temperature (about 72°F).

The thus coated specimens were then immersed in a material system that was prepared from 1897.6 grams of deionized water, 492.9 grams of ethyleneglycol mono-butyl ether (as carrier), and 308.1 grams of diethylene glycol (as diol) together in a mixing tank, thus forming a mixture having a total weight of 2698.6 grams. The mixture was heated to 85°C, and then forwarded continuously through a 20 micron bag filter into which 5.0 g of photochromic dye had been previously placed. The heated mixture, containing the photochromic dye, was cycled from the mixing tank through the bag filter and back to the mixing tank for a period of time sufficient to saturate the mixture of water, carrier and diol with the photochromic dye, and thus form the material system. The treatment bath was recycled back to the mixing tank through small openings (having diameters of 4.8 mm) to enhance turbulent mixing of the treatment bath during treatment operations.

The initial cycling, for purposes of forming a saturated treatment bath, was performed for a period of approximately 75 minutes (excluding heat-up time). The treatment bath was then continuously cycled through the above described system at a temperature of 85°C, and at a rate of 72 liters / minute.

The amount of photochromic dye in the treatment bath was about 0.2 percent by weight, based on the total weight of the treatment bath. The coated samples were immersed in the material system for 3 minutes, removed from the bath, rinsed with deionized water and dried with a soft towel.

The thus treated specimens were observed to exhibit photochromic properties.

**Table 1.**

| Sample | t50 (minutes) | Sample Fade Rate delta A at lambda max |
|---|---|---|
| Yellow | 0.19 | 0.25 |
| Red | 0.23 | 0.13 |
| Blue | 0.14 | 0.15 |
| Control | 2.21 | 0.33 |

The yellow, red and blue samples in Table 1 are polyurethane-coated polycarbonate substrates infused with photochromic dyes of different colors. The photochromic dyes used in these experiments were:
(i) 3,3-diphenyl-3H-naphtho[2,1-b]pyran,Variacrol Yellow L (CAS # 4222-20-2); a product of Great Lakes Chemical;
(ii) 1,3,3-trimethyl-spiro-indoline-6'-1 piperidinyl -2,3'-[3H]-naphtho[2,1-b][1,4]oxazine, Variacrol Red PNO (CAS# 114747-45-4); a product of Great Lakes Chemical;
(iii) 1,3-dihydro-3,3-dimethyl-1-isobutyl-spiro[2H-indole-2,3'-[3H]naphtho[2,1-b] [1,4]oxazine Reversacol Oxford Blue, James Robinson

The control sample is produced by infusing a blue photochromic dye directly into a non-coated polycarbonate substrate. The initial absorbance of the samples is measured and then the samples are activated for 10 minutes with UV radiation from a UV-lamp. The radiation source is removed and the absorbance is measured again as function of time. Delta A at lambda max is the difference between the sample absorbance (initial absorbance) before the samples are activated and immediately after the UV-source is removed after the 10 minute activation period. T50 is the time required for the absorbance to return to 50% of the initial absorbance.

## Claims

1. A process for making a photochromic article comprising:
(a) obtaining an article of manufacture having transparency determined in accordance with ASTM D 1003 of at least 10%, containing a first composition selected from the group consisting of thermoplastic molding composition and thermosetting composition;
(b) applying to at least a portion of the surface of the article a weatherable polyurethane coating;
(c) curing the coating to produce an article that includes a cured coating;
(d) bringing at least a portion of the coating into contact with a material system that contains
(i) water,
(ii) at least one carrier conforming to formula I, 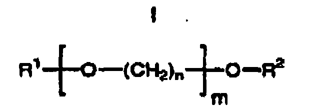 wherein R¹ is a radical selected from the group consisting of linear or branched C₁-C₁₈ alkyl, benzyl, benzoyl and phenyl, R² is R¹ or H, n is 2, 3 or 4, and m is 1 to 35;
(iii) a photochromic compound and
(iv) a diol
said contact under conditions calculated to bring about diffusion of said photochromic compound into the cured coating.

2. The process of Claim 1 wherein the photochromic compound is at least one member selected from the group consisting of naphthopyrans, benzopyrans, phenanthropyrans, indenonaphthopyrans, spiro(indoline)-naphthoxazines, spiro(indoline)pyridobanzoxazines, spiro(benzindoline)-pyridobenzoxazines, spiro(benzindoline)naphthoxazines, spiro(indoline)-benzoxazines, organo-metal dithizonates, fulgides and fulgimides.

3. The process of Claim 1 wherein the polyurethane coating is a product of the catalyzed reaction of at least one organic polyol selected from the first group consisting of low molecular weight polyols, polyester polyols, polyether polyols, amide-containing polyols, polyacrylic polyols, epoxy polyols, polyhydric polyvinyl alcohols, urethane polyols and mixtures of such polyols with at least one member selected from the second group consisting of aliphatic isocyanates, aromatic isocyanates, cycloaliphatic isocyanates and heterocyclic isocyanates, said product **characterized in that** equivalent ratio of isocyanate groups to isocyanate-reactive groups of about 0.8 to 3.

4. The process of Claim 3 wherein said second group consists of hexamethylene-1,6-diisocyanate, isophorone diisocyanate, bis-(4-isocyanatocyclohexyl)-mothane (HMDI), ethylene diisocyanate, dodecane-1,12-diisocyanate and cyclohexane-1,3-diisocyanate and modified isocyanate compounds.

5. The process of Claim 1 wherein said first composition contains at least one member selected from the group consisting of polyalkyl(meth)acrylate, cellulose acetate, poly(vinyl acetate), poly(vinyl alcohol), poly(vinyl chloride), poly(vinylidene chloride), polycarbonate, polyester, polyurethane, poly(ethylene terephthalate), polystyrene and styrene-acrylonitrile copolymer, polysiloxanes and polyamides.

6. The process of Claim 1 wherein the polyurethane coating is a product of the catalyzed reaction of a single organic polyol selected from the first group consisting of low molecular weight polyols, polyester polyols, polyether polyols, amide-containing polyols, polyacrylic polyols, epoxy polyols, polyhydric polyvinyl alcohols and urethane polyols with at least one member selected from the second group consisting of aliphatic isocyanates, aromatic isocyanates, cycloaliphatic isocyanates and heterocyclic isocyanates, said product **characterized in that** equivalent ratio of isocyanate groups to isocyanate-reactive groups of about 0.8 to 3.

7. The process of Claim 1 wherein said contact comprise immersing said article is said system.

8. The process of Claim 6 wherein R¹ denotes a member selected from the group consisting of n-butyl, i-butyl and t-butyl, and R² is selected from the group consisting of n-butyl, i-butyl, t-butyl and H.

9. The process of Claim 1 wherein said diol is a poly(C₂-C₄ alkylene glycol).

10. The process of Claim 1 wherein the diol is at least one member selected from the group consisting of diethylene glycol, triethylene glycol, tetraethylene glycol and pentaethylene glycol .

11. The process of Claim 1 wherein said contact comprise spin coating.

12. The process of claim 1 wherein said contact is by spraying.

13. The process of Claim 1 wherein said contact is by flow coating.

14. The process of Claim 1 wherein applying of the coating is by coextrusion or by spraying.

15. The photochromic article prepared by the process of Claim 1.

## Patentansprüche

1. Verfahren zur Herstellung eines photochromen Artikels, umfassend:
(a) Erhalten eines hergestellten Gegenstands, der eine Transparenz, bestimmt gemäss ASTM D 1003, von mindestens 10 % aufweist, enthaltend eine erste Zusammensetzung, die ausgewählt ist aus der Gruppe bestehend aus thermoplastischen Formmassen und duroplastischen Massen;
(b) Auftragen einer wetterbeständigen Polyurethanbeschichtung auf zumindest einen Teil der Oberfläche des Gegenstands;
(c) Härten der Beschichtung, um einen Gegenstand herzustellen, der eine gehärtete Beschichtung umfasst;
(d) In-Kontakt-Bringen von zumindest einem Teil der Beschichtung mit einem Materialsystem, welches
(i) Wasser,
(ii) mindestens einen Träger, der der Formel (I) entspricht: 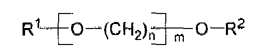 worin R¹ ein Rest ist, ausgewählt aus der Gruppe bestehend aus linearem oder verzweigtem C₁₋₁₆-Alkyl, Benzyl, Benzoyl und Phenyl, R² R¹ oder H ist, n 2, oder 4 ist und m 1 bis 35 ist;
(iii) eine photochrome Verbindung und
(iv) ein Diol
umfasst, wobei der Kontakt unter Bedingungen herbeigeführt wird, die berechnet sind, um eine Diffusion der photochromen Verbindung in die gehärtete Beschichtung herbeizuführen.

2. Verfahren gemäss Anspruch 1, worin die photochrome Verbindung mindestes eine Verbindung ist, ausgewählt aus der Gruppe bestehend aus Naphthopyranen, Benzopyranen, Phenanthropyranen, Indenonaphthopyranen, Spiro(indolin)naphthoxazinen, Spiro(indolin)pyridobenzoxazinen, Spiro(benzindolin)pyridobenzoxazinen, Spiro(benzindolin)naphthoxazinen, Spiro(indolin)benzoxazinen, Organometalldithizonaten, Fulgiden und Fulgimiden.

3. Verfahren gemäss Anspruch 1, worin die Polyurethanbesahichtung ein Produkt der katalysierten Reaktion von mindestens einem organischen Polyol, ausgewählt aus der ersten Gruppe, bestehend aus Polyolen mit niedrigem Molekulargewicht, Polyesterpolyolen, Polyetherpolyolen, amidhaltigen Polyolen, Polyacrylpolyolen, Epoxypolyolen, mehrwertigen Polyvinylalkoholen, Urethanpolyolen und Mischungen solcher Polyole, mit zumindest einer Verbindung ist, ausgewählt aus der zweiten Gruppe, bestehend aus aliphatischen Isocyanaten, aromatischen Isocyanaten, cycloaliphatischen Isocyanaten und heterocyclischen Isocyanaten, wobei das Produkt **dadurch gekennzeichnet ist, dass** das Äquivalenzverhältnis von Tsocyanatgruppen zu Isocyanat-reaktiven Gruppen etwa 0,8 bis 3 beträgt.

4. Verfahren gemäss Anspruch 3, worin die zweite Gruppe aus Hexamethylen-1,6-diisocyanat, Isophorondiisocyanat, Bis-(4-isocyanatocyclohexyl)-methan (HMDI), Ethylendiisocyanat, Dodecan-1,12-diisocyanat und Cyclohexan-1,3-diisocyanat und modifizierten Isocyanatverbindungen besteht.

5. Verfahren gemäss Anspruch 1, worin die erste Zusammensetzung zumindest eine Verbindung enthält, ausgewählt aus der Gruppe bestehend aus Polyalkyl(meth)acrylat, Celluloseacetat, Poly(vinylacetat), Poly(vinylalkohol), Poly(vinylchlorid), Poly(vinylidenchlorid), Polycarbonat, Polyester, Polyurethan, Poly(ethylenterephthalat), Polystyrol und Styrol-Acrylnitril-Copolymer, Polysiloxanen und Polyamiden.

6. Verfahren gemäss Anspruch 1, worin die Polyurethanbeschichtung ein Produkt der katalysierten Reaktion eines einzelnen organischen Polyols, ausgewählt aus der ersten Gruppe, bestehend aus Polyolen mit niedrigem Molekulargewicht, Polyesterpolyolen, Polyetherpolyolen, amidhaltigen Polyolen, Polyacrylpolyolen, Epoxypolyolen, mehrwertigen Polyvinylalkoholen und Urethanpolyolen, mit mindestens einer Verbindung, ausgewählt aus der zweiten Gruppe, bestehend aus aliphatischen Isocyanaten, aromatischen Isocyanaten, cycloaliphatischen Isocyanaten und heterocyclischen Isocyanaten, ist, wobei das Produkt **dadurch gekennzeichnet ist, dass** das Äquivalenzverhältnis von Isocyanatgruppen zu Isocyanat-reaktiven Gruppen etwa 0,8 bis 3 beträgt.

7. Verfahren gemäss Anspruch 1, worin der Kontakt das Eintauchen des Artikels in das System umfasst.

8. Verfahren gemäss Anspruch 6, worin R¹ einen Rest bezeichnet, ausgewählt aus der Gruppe bestehend aus n-Butyl, i-Butyl und t-Butyl, und R² ausgewählt ist aus der Gruppe bestehend aus n-Butyl, i-Butyl, t-Butyl und H.

9. Verfahren gemäss Anspruch 1, worin das Diol ein Poly(C₂₋₄-alkylenglykol) ist.

10. Verfahren gemäss Anspruch 1, worin das Diol mindestens eine Verbindung ist, ausgewählt aus der Gruppe bestehend aus Diethylenglykol, Triethylenglykol, Tetraethylenglykol und Pentaethylenglykol.

11. Verfahren gemäss Anspruch 1, worin der Kontakt Rotationsbeschichtung umfasst.

12. Verfahren gemäss Anspruch 1, worin der Kontakt durch Sprühen herbeigeführt wird.

13. Verfahren gemäss Anspruch 1, worin der Kontakt durch Fliessbeschichtung hergestellt wird.

14. Verfahren gemäss Anspruch 1, worin das Auftragen der Beschichtung durch Coextrusion oder durch Sprühen herbeigeführt wird.

15. Photochromer Gegenstand, hergestellt mit dem verfahren gemäss Anspruch 1.

## Revendications

1. Procédé de fabrication d'un article photochromique comprenant les étapes consistant :
(a) à obtenir un article de fabrication présentant une transparence déterminée selon ASTM D 1003 d'au moins 10 % contenant une première composition choisie dans le groupe constitué d'une composition de moulage thermoplastique et d'une composition thermodurcissable ;
(b) à appliquer sur au moins une partie de la surface de l'article un revêtement de polyuréthane résistant aux conditions météorologiques ;
(c) à faire durcir le revêtement pour produire un article qui comprend un revêtement durci ;
(d) à mettre au moins une partie du revêtement en contact avec un système de matériau qui contient
(i) de l'eau
(ii) au moins un support conforme à la formule I, 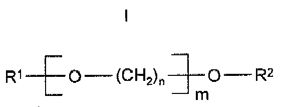 dans laquelle R¹ est un radical choisi dans le groupe constitué d'un groupe alkyle en C₁-C₁₈ linéaire ou ramifié, benzyle, benzoyle et phényle, R² est R¹ ou H, n et égal à 2, 3 ou 4 et m est égal à de 1 à 35 ;
(iii) un composé photochromique et
(iv) un diol
ledit contact étant réalisé dans des conditions calculées pour arriver à une diffusion dudit composé photochromique dans le revêtement durci.

2. Procédé selon la revendication 1, dans lequel le composé photochromique est au moins un élément choisi dans le groupe constitué de naphthopyranes, de benzopyranes, de phénanthropyranes, d'indénonaphthopyranes, de spiro(indoline)naphthoxazines, de spiro(indoline)pyridobenzoxazines, de spiro(benzindoline)pyridobenzoxazines, de spiro(benzindoline)naphthoxazines, de spiro(indoline)-benzoxazines, de dithizonates organométalliques, de fulgides et de fulgimides.

3. Procédé selon la revendication 1, dans lequel le revêtement de polyuréthane est un produit de la réaction catalysée d'au moins un polyol organique choisi dans le premier groupe constitué de polyols, de polyesterpolyols, de polyétherpolyols, de polyols contenant des amides, de polyols polyacryliques, d'époxypolyols, de poly(alcools vinyliques) polyvalents, d'uréthanepolyols de faible masse moléculaire et de mélanges de tels polyols avec au moins un élément choisi dans le second groupe constitué d'isocyanates aliphatiques, d'isocyanates aromatiques, d'isocyanates cycloaliphatiques et d'isocyanates hétérocycliques, ledit produit étant **caractérisé en ce que** le rapport d'équivalent des groupes isocyanates aux groupes isocyanate-réactifs est d'environ 0,8 à 3.

4. Procédé selon la revendication 3, dans lequel ledit second groupe est constitué de 1,6-diisocyanate d'hexaméthylène, de diisocyanate d'isophorone, de bis-(4-isocyanatocyclohexyl)-méthane (HMDI), de diisocyanate d'éthylène, de 1,12-diisocyanate de dodécane et de 1,3-diisocyanate de cyclohexane et de composés isocyanates modifiés.

5. Procédé selon la revendication 1, dans lequel ladite première composition contient au moins un élément choisi dans le groupe constitué de poly((méth)acryiate d'alkyle), d'acétate de cellulose, de poly(acétate de vinyle), de poly(alcool vinylique), de poly(chlorure de vinyle), de poly(chlorure de vinylidène), de polycarbonate, de polyester, de polyuréthane, de poly(éthyléne téréphtalate), de polystyrène et de copolymère de styrène-acrylonitrile, de polysiloxanes et de polyamides.

6. Procédé selon la revendication 1, dans lequel le revêtement de polyuréthane est un produit de la réaction catalysée d'un polyol organique unique choisi dans le premier groupe constitué de polyols, de polyesterpolyols, de polyétherpolyols, de polyols contenant des amides, de polyols polyacryliques, d'époxypolyols, de poly(alcools vinyliques) polyvalents et d'uréthanepolyols de faible masse moléculaire avec au moins un élément choisi dans le second groupe constitué d'isocyanates aliphatiques, d'isocyanates aromatiques, d'isocyanates cycloaliphatiques et d'isocyanates hétérocycliques, ledit produit étant **caractérisé en ce que** le rapport d'équivalent des groupes isocyanates aux groupes isocyanate-réactifs est d'environ 0,8 à 3.

7. Procédé selon la revendication 1, dans lequel ledit contact comprend l'immersion dudit article dans ledit système.

8. Procédé selon la revendication 6, dans lequel R¹ indique un élément choisi dans le groupe constitué du n-butyle, du i-butyle et du t-butyle, et R² est choisi dans le groupe constitué du n-butyle, du i-butyle, du t-butyle et de H.

9. Procédé selon la revendication 1, dans lequel ledit diol est un poly(alkylèneglycol en C₂-C₄).

10. Procédé selon la revendication 1, dans lequel le diol est au moins un élément choisi dans le groupe constitué du diéthylèneglycol, du triéthylèneglycol, du tétraéthylèneglycol et du pentaéthylèneglycol.

11. Procédé selon la revendication 1, dans lequel ledit contact comprend un revêtement centrifuge.

12. Procédé selon la revendication 1, dans lequel ledit contact se fait par pulvérisation.

13. Procédé selon la revendication 1, dans lequel ledit contact se fait par revêtement par écoulement.

14. Procédé selon la revendication 1, dans lequel l'application du revêtement se fait par coextrusion ou par pulvérisation.

15. Article photochromique préparé par le procédé selon la revendication 1.
